# EUROPEAN PATENT APPLICATION

(11) **EP 3 376 692 A1**
(43) Date of publication of application: **19.09.2018**
(21) Application number: 16864057.1
(22) Date of filing: 31.10.2016
(51) Int. Cl.: H04B 17/345, H04W 74/08, H04W 84/12

(54) **TERMINAL DEVICE AND COMMUNICATION METHOD**

(30) Priority: 13.11.2015 JP 2015222858
(71) Applicant: Sharp Kabushiki Kaisha, Sakai City, Osaka 590-8522 (JP)
(72) Inventor: YOSHIMURA Tomoki, Osaka 590-8522 (JP); TOMEBA, Hiromichi, Osaka 590-8522 (JP)
(74) Representative: Müller-Boré & Partner Patentanwälte PartG mbB
(86) International application number: PCT/JP2016/082232
(87) International publication number: WO 2017/082094

(57) **Abstract**

An incident in which a radio LAN device cannot determine a reception signal to be a radio LAN signal frequently occurs even though the transmitted signal is a radio LAN signal, due to collisions between the radio LAN signals or other causes. In other words, the radio LAN device operates in such a manner in some case as to protect a reception signal with a threshold for Energy Detection even in a case where the stated reception signal is a radio LAN signal, so that appropriate protection is not carried out. Because an incident in which a radio LAN signal is protected with a threshold for Energy Detection frequently occurs, the threshold for Energy Detection is adjusted to preferably protect the radio LAN signals.

## Description

### TECHNICAL FIELD

The present invention relates to a terminal device and a communication method.

### BACKGROUND ART

The Institute of Electrical and Electronics Engineers Inc. (IEEE) has formulated IEEE802.11ac to further speed up IEEE802.11 as a radio Local Area Network (LAN) standard. A standardization activity for IEEE802.11ax as a succeeding standard of IEEE802.11ac has been started. With the rapid spread of LAN devices, improvement in throughput per user in an environment in which radio LAN devices are densely disposed is also being studied in the standardization of IEEEE802.11ax. As one of the studies, a change of the transmission propriety determination standard is being discussed.

A radio LAN system is a system configured to determine transmission propriety based on Clear Channel Assessment (CCA). As Clear Channel Assessment methods, a method called Carrier Sense (CS) and a method called Energy Detection are well-known. The Carrier Sense refers to operation to detect a radio LAN signal based on a preamble, control information, or the like; in the case where the radio LAN signal is detected, transmission propriety determination is made based on a threshold for Carrier Sense (a Carrier Sense level or the like).

In a case where it is unable to determine whether the received signal is a radio LAN signal, the transmission propriety determination is made based on a result of the Energy Detection and a threshold for the Energy Detection. It is known that, in general, the threshold for the Energy Detection is configured to be higher than the threshold for the Carrier Sense. It can be stated that, in radio LAN systems, transmission determination standards applied in a case that a radio LAN signal is received, are strict compared with signals other than the radio LAN signal except in some systems such as meteorological radar. A method for Carrier Sense and a threshold, a method for Energy Detection and a threshold, and the like are described in NPL 1.

### CITATION LIST

### [Non-Patent Document]

[NON-PATENT DOCUMENT 1] NPL 1: IEEE Std 802.11ac-2013, amendment to IEEE Std 802.11TM-2012

### DISCLOSURE OF THE INVENTION

### Problems to be Solved by the Invention

On the other hand, in an environment in which radio LAN devices are densely disposed, an incident in which a radio LAN device cannot determine a reception signal to be a radio LAN signal frequently occurs even though the transmitted signal is a radio LAN signal, due to collisions between the radio LAN signals or other causes. In other words, the radio LAN device operates in such a manner in some case as to protect a reception signal with a threshold for Energy Detection even in a case where the stated reception signal is a radio LAN signal, so that appropriate protection is not carried out.

### Means for Solving the Problems

In an environment in which radio LAN devices are densely disposed, an incident in which a radio LAN signal is protected with a threshold for Energy Detection frequently occurs, thus the threshold for Energy Detection is adjusted to preferably protect the radio LAN signals.

To address the above-mentioned drawbacks, a terminal device and a communication method according to an aspect of the present invention are configured as follows.
(1) A terminal device according to an aspect of the present invention is a terminal device that is provided with a function to perform Clear Channel Assessment and includes: a reception unit configured to receive a radio signal and acquire information on a configuration of the stated radio signal; and a Clear Channel Assessment unit for configuring a first Clear Channel Assessment threshold to be used in the Clear Channel Assessment based on information on a configuration of a first radio signal acquired in a case that the radio signal is the first radio signal, and for configuring a second Clear Channel Assessment threshold to be used in the Clear Channel Assessment based on information on a configuration of a second radio signal acquired in a case that the radio signal is the second radio signal.
(2) A terminal device according to an aspect of the present invention is the terminal device disclosed in the description of (1) in which the information on the configuration of the first radio signal includes information on whether the information on the configuration of the first radio signal can be acquired.
(3) A terminal device according to an aspect of the present invention is the terminal device disclosed in the description of (2) in which the information on the configuration of the second radio signal includes information on whether the information on the configuration of the second radio signal can be acquired.
(4) A terminal device according to an aspect of the present invention is the terminal device disclosed in the description of (1) in which the information on the configuration of the first radio signal includes information on a scheme to which the first radio signal corresponds.
(5) A terminal device according to an aspect of the present invention is the terminal device disclosed in the description of (4) in which the information on the configuration of the second radio signal includes information on a scheme to which the second radio signal corresponds.
(6) A terminal device according to an aspect of the present invention is the terminal device disclosed in the description of (1) in which the first radio signal and the second radio signal are included in an identical frame.
(7) A terminal device according to an aspect of the present invention is the terminal device disclosed in any one of the descriptions of (1) through (6) in which the first Clear Channel Assessment threshold and the second Clear Channel Assessment threshold are thresholds used in energy assessment.
(8) A communication method according to an aspect of the present invention is a communication method for a terminal device, the method including the steps of: receiving a radio signal and acquiring information on a configuration of the stated radio signal; and configuring a first Clear Channel Assessment threshold to be used in the Clear Channel Assessment based on information on a configuration of a first radio signal acquired in the case that the radio signal is the first radio signal, and configuring a second Clear Channel Assessment threshold to be used in the Clear Channel Assessment based on information on a configuration of a second radio signal acquired in the case that the radio signal is the second radio signal.

### Effects of the Invention

According to an aspect of the present invention, since radio LAN signals are preferably protected, improvement in frequency efficiency is achieved.

### BRIEF DESCRIPTION OF THE DRAWINGS

FIG. 1 is a diagram illustrating an example of a management range of a radio communication system according to an aspect of the present invention.
FIG. 2 is a diagram illustrating an example of a Clear Channel Assessment method in a radio LAN system according to an aspect of the present invention.
FIG. 3 is a diagram illustrating examples of frame configurations transmitted by a terminal device according to an aspect of the present invention.
FIG. 4 is a diagram illustrating an example of a Clear Channel Assessment operation of a terminal device according to an aspect of the present invention.
FIG. 5 is a diagram illustrating an example of a device configuration of a base station device according to an aspect of the present invention.
FIG. 6 is a diagram illustrating an example of a configuration of a reception unit included in a terminal device according to an aspect of the present invention.
FIG. 7 is a diagram illustrating an example of a case in which a synchronization preamble according to an aspect of the present invention cannot be detected.
FIG. 8 is a diagram illustrating an example of part of a CCA period according to an aspect of the present invention.

### MODE FOR CARRYING OUT THE INVENTION

A communication system according to the present embodiment includes a radio transmission device (an Access point, a base station device) and multiple radio reception devices (stations, terminal devices). A network configured of the base station device and the terminal devices is called a Basic service set (BSS, a management range). The base station device and the terminal devices are collectively called a radio communication device as well.

The base station device and the terminal devices within the BSS respectively carry out communications based on the Carrier sense multiple access with collision avoidance (CSMA/CA). Although the present embodiment supports an infrastructure mode in which the base station device communicates with the multiple terminal devices, a method of the present embodiment can also be implemented in an ad hoc mode in which the terminal devices directly communicate with each other. In the ad hoc mode, in place of the base station device, the terminal devices form a BSS. The BSS in the ad hoc mode is also called an Independent Basic Service Set (IBSS). Hereinafter, the terminal device forming the IBSS in the ad hoc mode is considered as a base station device.

In the IEEE802.11 system, each device can transmit transmission frames of multiple frame types having a common frame format. The transmission frames are defined in each of a Physical (PHY) layer, a Medium access control (MAC) layer, and a Logical Link Control (LLC) layer.

The transmission frame in the PHY layer is called a PHY protocol data unit (PPDU, a physical layer frame). The PPDU is configured of a physical layer header (PHY header) including header information or the like for signal processing in the physical layer, a PHY service data unit (PSDU, a MAC layer frame) as a data unit to be processed in the physical layer, and the like. The PSDU can be configured of an Aggregated MAC protocol data unit (A-MPDU) in which multiple MAC protocol data units (MPDUs), each of which is a re-transmission unit in a radio interval, are aggregated.

The PHY header includes: reference signals such as a Short training field (STF) used for signal detection, synchronization and the like, and a Long training field (LTF) used for acquiring channel information for data demodulation; and control signals such as a Signal (SIG) including control information for data demodulation. Further, the STF is classified into a Legacy STF (L-STF), a High throughput-STF (HT-STF), a Very high throughput-STF (VHT-STF), and the like in accordance with the corresponding standard. Likewise, the LTF and the SIG are classified into an L-LTF, an HT-LTF, a VHT-LTF, an L-SIG, an HT-SIG, and a VHT-SIG. The VHT-SIG is further classified into a VHT-SIG-A and a VHT-SIG-B.

Moreover, the PHY header can include information for identifying the BSS of the transmission source of the transmission frame (hereinafter, also referred to as BSS identification information). The information for identifying the BSS can be a Service Set Identifier (SSID) of the BSS or an MAC address of the base station device of the BSS, for example. Further, the information for identifying the BSS can be a value specific to the BSS (e.g., BSS Color or the like) other than the SSID, the MAC address, and the like.

The PPDU is modulated in accordance with the corresponding standard. For example, in the case of IEEE802.1 In standard, the PPDU is modulated to an Orthogonal frequency division multiplexing (OFDM) signal.

The MPDU is configured of a MAC header including header information or the like for signal processing in the MAC layer, a MAC service data unit (MSDU) as a data unit to be processed in the MAC layer or a frame body, and a Frame check sequence (FCS) to check whether any error is present in the frame. Further, multiple MSDUs can be aggregated as an Aggregated MSDU (A-MSDU).

Frame types of the transmission frames of the MAC layer are roughly classified into three types of frames, that is, a management frame to manage a connection state between the devices or the like, a control frame to manage a communication state between the devices, and a data frame including actual transmission data, where each of the frames is further classified into multiple kinds of sub frame types. The control frame includes an Acknowledge (Ack) frame, a Request to send (RTS) frame, a Clear to send (CTS) frame, and the like. The management frame includes a Beacon frame, a Probe request frame, a Probe response frame, an Authentication frame, an Association request frame, an Association response frame, and the like. The data frame includes a Data frame, a CF-poll frame, and the like. Each of the devices can recognize the frame type and the sub frame type of the received frame by reading contents of frame control fields included in the MAC header.

The Ack may include Block Ack. The Block Ack can carry out Acknowledge toward multiple MPDUs.

The Beacon frame includes a Field in which a Beacon interval, the SSID, and the like are described. The base station device can periodically broadcast Beacon frames into the BSS, and the terminal device can recognize the base station device in the periphery of the terminal device by receiving the Beacon frame. Operation in which the terminal device recognizes the base station device based on the Beacon frame broadcast by the base station device is referred to as Passive scanning. On the other hand, operation in which the terminal device searches the base station device by broadcasting a Probe request frame into the BSS is referred to as Active scanning. The base station device can transmit a Probe response frame as a response to the above Probe request frame, and contents described in the Probe response frame are the same as the contents in the Beacon frame.

The terminal device, after having recognized the base station device, carries out connection processing with respect to the stated base station device. The connection processing is classified into Authentication processing and Association processing. The terminal device transmits an Authentication frame (authentication request) to the base station device with which the terminal device wants to connect. The base station device, in a case of having received the Authentication frame, transmits, to the terminal device, an Authentication frame (authentication response) including a status code indicating whether the authentication with respect to the stated terminal is successful or the like. The terminal device can determine whether the base station device has allowed the Authentication of the terminal device itself by reading the status code described in the Authentication frame. Operation of transmitting and receiving the Authentication frames can be repeated multiple times between the base station device and the terminal device.

Following the Authentication processing, the terminal device transmits an Association request frame to the base station device to carry out the Association processing. The base station device, in a case of having received the Association request frame, determines whether to allow the connection with the terminal device, and then transmits an Association response frame to report the determination. In the Association response frame, there is described an Association identifier (AID) for identifying the terminal device, in addition to a status code indicating whether the connection processing is allowed. The base station device can manage multiple terminal devices by configuring mutually different AIDs to the terminal devices that are allowed by the base station device to be connected to the base station device.

After the connection processing, the base station device and the terminal device carry out the transmission of actual data. In the IEEE802.11 system, a Distributed Coordination Function (DCF) and a Point Coordination Function (PCF), and functions in which the above functions are enhanced (Enhanced distributed channel access (EDCA), a Hybrid coordination function (HCF), and the like) are defined. A case in which a base station device transmits a signal to a terminal device with the DCF is cited as an example and explained in the following description.

In the DCF, the base station device and the terminal device, prior to starting the communication, perform Carrier sense (CS) to confirm a usage state of a radio channel in the periphery of the devices themselves. For example, in a case where the base station device as a transmission station receives a signal at a level higher than a predetermined Clear channel assessment level (CCA level) in the above-mentioned radio channel, the base station device postpones the transmission of a transmission frame in the stated radio channel. Hereinafter, in the stated radio channel, a state in which a signal at a level higher than the CCA level is detected is referred to as a Busy state, while a state in which a signal at a level higher than the CCA level is not detected is referred to as an Idle state. The CS performed by each device based on power of an actually received signal (reception power level) as discussed above is referred to as physical Carrier sense (physical CS). The CCA level is also called a Carrier sense level (CS level) or a CCA threshold (CCAT). The base station device and the terminal device, in a case of having detected a signal at a higher level than the CCA level, start operation to demodulate the signal at least of the PHY layer.

The base station device performs Carrier sense for an Inter frame space (IFS) in accordance with a type of the transmission frame to be transmitted, so as to determine whether the radio channel is in the Busy state or in the Idle state. A period in which the base station device performs the Carrier sense differs depending on the frame type and the sub frame type of the transmission frame to be transmitted by the base station device. In the IEEE802.11 system, multiple IFSs of different periods are defined, where there exist a Short IFS (SIFS) used for a transmission frame that is given the highest priority, a PCF IFS (PIFS) used for a transmission frame having relatively high priority, a DCF IFS (DIFS) used for a transmission frame having the lowest priority, and the like. In the case where the base station device transmits a data frame with the DCF, the base station device uses the DIFS.

The base station device stands by for the DIFS, and thereafter further stands by for a random backoff time to avoid a collision between the frames. In the IEEE802.11 system, a random backoff time called a Contention window (CW) is used. In the CSMA/CA, it is assumed that a transmission frame transmitted by a certain transmission station is received by a reception station without interference from other stations. Because of this, in a case where transmission stations transmit respective transmission frames at the same timing, the frames collide with each other so that the reception station cannot receive the frame correctly. As such, each of the transmission stations stands by for a randomly-set time before starting the transmission, thereby avoiding the collision between the frames. In the case where the base station device determines the radio channel to be in an Idle state by Carrier sense, the base station device starts countdown of the CW, obtains the right of transmission only in a case that the CW becomes 0, and then can transmit the transmission frame to the terminal device. In the case where the base station device determines the radio channel to be in a Busy state by Carrier sense during the countdown of the CW, the base station device stops the countdown of the CW. Then, in a case that the radio channel has come to be in the Idle state, the base station device starts, following a leading IFS, the remaining countdown of the CW.

The terminal device as a reception station receives a transmission frame, reads the PHY header in the transmission frame, and demodulates the received transmission frame. The terminal device reads the MAC header of the demodulated signal, which makes it possible for the terminal device to recognize whether the transmission frame is targeted at the terminal device itself. The terminal device can also determine the destination of the transmission frame based on information described in the PHY header (e.g., a Group identifier (GID) where the VHT-SIG-A is described).

In the case where the terminal device determines the received transmission frame to be targeted at the terminal device itself and has demodulated the transmission frame without any error, the terminal device needs to transmit, to the base station device as the transmission station, an ACK frame indicating that the frame has been correctly received. The ACK frame is one of the most prioritized transmission frames that is transmitted only with an SIFS period standby (that is, a random backoff time is not taken). The base station device completes a sequence of communications by receiving the ACK frame transmitted from the terminal device. In a case where the terminal device cannot correctly receive the frame, the terminal device does not transmit the ACK. Accordingly, in a case where the base station device has not received the ACK frame from the reception station for a set period of time (SIFS + an ACK frame length) after the frame was transmitted therefrom, the base station device considers the communication to be unsuccessful and terminates the communication. As discussed above, the termination of communication of one time (also called a burst) in the IEEE802.11 system is determined for sure by the presence or absence of reception of the ACK frame except for special cases such as a case of transmitting a broadcast signal such as a Beacon frame and a case of using fragmentation to divide transmission data.

In a case where the terminal device determines the received transmission frame to be not targeted for the terminal device itself, the terminal device configures a Network allocation vector (NAV) based on a length of the transmission frame described in the PHY header or the like. The terminal device does not attempt to perform communication for a period configured in the NAV. That is, the terminal device performs the same operation for the period configured in the NAV as the operation performed in the case where the terminal device determines the radio channel to be in a Busy state by the physical CS. Because of this, communication control by the NAV is also called virtual Carrier sense (virtual CS). The NAV is also configured by a Request to send (RTS) frame introduced to resolve a hidden node problem, a Clear to send (CST) frame, or the like, in addition to the case of being configured based on the information described in the PHY header.

In the DCF, each device performs Carrier sense to independently obtain the right of transmission. In contrast, in the PCF, a control station called a Point coordinator (PC) controls the right of transmission of each device inside the BSS. In general, a base station device serves as a PC and obtains the right of transmission for each terminal device inside the BSS.

A Contention free period (CFP) and a Contention period (CP) are included in a communication period by the PCF. Communication is carried out based on the above-discussed DCF during the CP, and the PC controls the right of transmission during the CFP. The base station device as a PC broadcasts, prior to the PCF communication, a Beacon frame in which CFP Max duration and the like are described into the BSS. The PIFS is used for transmitting the Beacon frame to be broadcast at the start time of the PCF transmission, where the Beacon frame is transmitted without waiting for the CW. The terminal device having received the Beacon frame configures the period described in the Beacon frame to the NAV. After this, the terminal device can obtain the right of transmission only in a case of having received a signal signalling the transmission right obtainment transmitted from the PC (e.g., a data frame including the CF-poll) until the NAV has elapsed or a signal broadcasting the end of the CFP into the BSS (e.g., a data frame including a CF-end) has been received. Because a collision between packets is not generated inside the same BSS during the CFP, each of the terminal devices does not take a random backoff time used in the DCF.

Note that, hereinafter, the terminal device can be equipped with a function similar to the function of the base station device. In addition, the base station device can be equipped with a function similar to the function of the terminal device. In other words, the base station device and the terminal device can include the same function unless otherwise stated.

Further, in the following description, the frame is also referred to as a radio signal, a reception signal, a burst, a reception burst, or the like.

### 1. First Embodiment

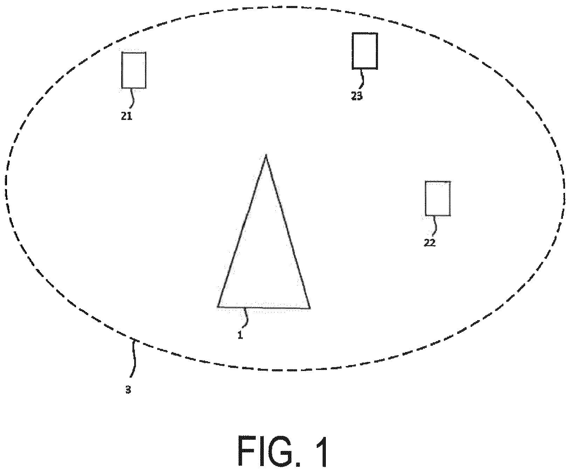

FIG. 1 is a diagram illustrating an example of a management range 3 of a radio communication system according to the present embodiment. The management range 3 is configured to include a base station device 1, a terminal device 21, a terminal device 22, and a terminal device 23. Hereinafter, the terminal devices 21 to 23 are collectively called a terminal device 20 as well. Although, in the example illustrated in FIG. 1, the management range 3 includes three terminal devices 20, a method of the present embodiment can be implemented in a case where the management range 3 includes at least one terminal device 20. Further, hereinafter, the base station device 1 and the terminal device 20 are collectively called a terminal device 20 as well. There is a case in which "description on the terminal device 20" refers to description on operation common to the base station device 1 and the terminal device 20 unless otherwise stated, and there is also a case in which "description on the base station device 1" refers to description on operation specific to the base station device 1.

Prior to transmitting a transmission frame into a radio space, the base station device 1 and the terminal device 20 determine the transmission propriety by Clear Channel Assessment (CCA).

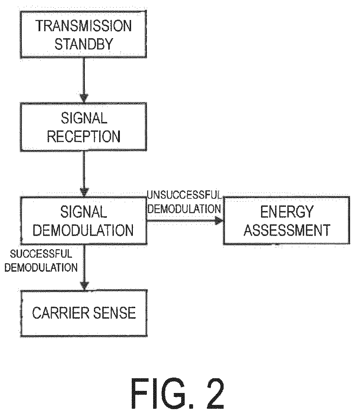

FIG. 2 is a diagram illustrating an example of a Clear Channel Assessment method in a radio LAN system. The terminal device 20 is first on a transmission standby during an IFS period, a backoff period of time, or the like for a frame transmission standby. In a case that the terminal device 20 receives a signal during being on the transmission standby, the terminal device 20 carries out operation to demodulate the signal. A specific operation of the signal demodulation will be explained later. In the case where the signal demodulation has been successfully carried out by the terminal device 20, operation of Carrier Sense (CS/CCA, Carrier Sense/Clear Channel Assessment, CS, Carrier Sense) is started; in the case where the signal demodulation has been unsuccessfully carried out, operation of Energy Detection (Energy Assessment) is started.

In the case of the successful signal demodulation, the terminal device 20 determines the transmission propriety based on a threshold of the Carrier Sense (hereinafter, also called a CS level). The terminal device 20 compares reception power (reception strength, electric field density, electric field strength, power level) of the modulated signal with the CS level, and determines that the transmission can be carried out in the case where the reception power exceeds the value of the CS level. Note that in the following description, the "transmission propriety determination" means "to determine whether the transmission can be carried out in a channel (Channel, Carrier) which the terminal device 20 wants to use. After the transmission propriety determination, it is not always the case that the frame is transmitted; that is, operation in which the counter of the IFS, the backoff, or the like is decreased can also be carried out.

In the case of the unsuccessful signal demodulation, the terminal device 20 determines the transmission propriety based on a threshold of the Energy Assessment (hereinafter, also called an ED level). The terminal device 20 compares reception power (reception strength, electric field density, electric field strength, power level) of the detected signal with the ED level, and determines that the transmission can be carried out in the case where the reception power exceeds the value of the CS level.

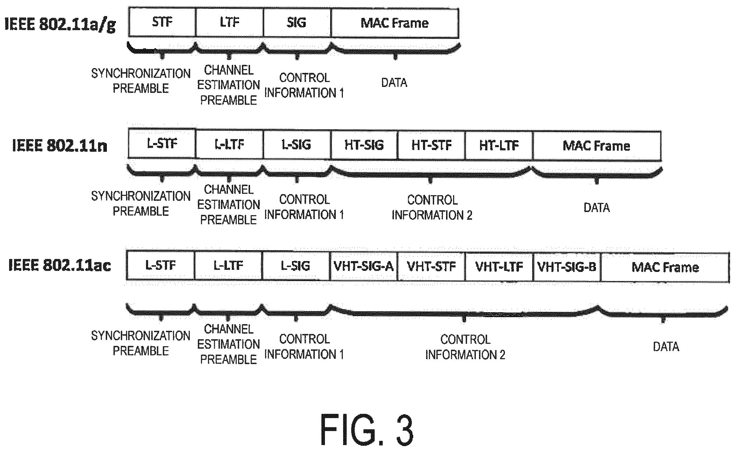

A demodulation method for the signal will be described next. FIG. 3 is a diagram illustrating examples of frame configurations transmitted by the terminal device 20. In the drawing, an example illustrated at the upper side is an example of a frame configuration corresponding to IEEE 802.11a or 11g standard, where an STF is a preamble that can be used for synchronization (or initial synchronization or the like), and an LTF is a preamble that can be used for channel estimation. Further, an SIG includes control information than can be used to decode a subsequent MAC Frame.

Next, an example illustrated in the middle is an example of a frame configuration corresponding to IEEE 802.11n standard, and an example illustrated at the lower side is an example of a frame configuration corresponding to IEEE 802.11ac standard.

As illustrated in FIG. 3, elements constituting the frames corresponding to the respective standards of IEEE 802.11 can be classified into a synchronization preamble, a channel estimation preamble, control information 1, and control information 2. Note that a classification method for the elements constituting the frames is not limited to the above example.

The synchronization preamble includes the STF and an L-STF. The channel estimation preamble includes the LTF and an L-LTF. The channel estimation preamble can also be used for synchronization estimation, frequency offset estimation, and the like in addition to the channel estimation. The control information 1 includes the SIG and an L-SIG. The control information 1 can include information associated with a length of the frame, and the like. The control information 2 includes an HT-SIG, an HT-STF, an HT-LTF, a VHT-SIG-A, a VHT-STF, a VHT-LTF, and a VHT-SIG-B. The functions of the control information 2 includes a wide range of functions such as frame configuration estimation, channel estimation, control information acquisition, and the like. Data includes the MAC Frame.

A new frame configuration is under discussion in IEEE 802.11ax. A frame corresponding to IEEE 802.11ax can have a High Efficiency-SIG-A (HE-SIG-A), High Efficiency-STF (HE-STF), High Efficiency-LTF (HE-LTF), High Efficiency-SIG-B (HE-SIG-B), and the like included in the control information 2.

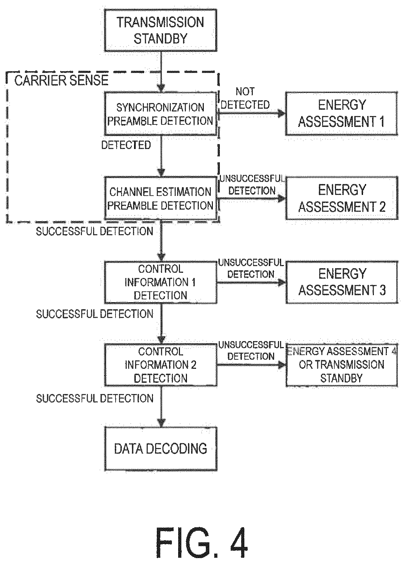

FIG. 4 is a diagram illustrating an example of a Clear Channel Assessment operation of the terminal device 20. First, the terminal device 20 being on the transmission standby performs operation to detect a synchronization preamble. The synchronization preamble has a previously known configuration in the terminal device 20, and can be detected by calculating a temporal correlation with respect to the reception signal.

In a case where the synchronization preamble is not detected, the terminal device 20 can determine the transmission propriety by Energy Assessment 1. On the other hand, in a case where the synchronization preamble is detected, the terminal device 20 performs operation to detect a channel estimation preamble.

In a case where the detection of the channel estimation preamble is unsuccessful, the terminal device 20 can determine the transmission propriety by Energy Assessment 2. On the other hand, in a case where the detection of the channel estimation preamble is successful, the terminal device 20 performs operation to detect control information 1.

In a case where the detection of the control information 1 is unsuccessful, the terminal device 20 can determine the transmission propriety by Energy Assessment 3. On the other hand, in a case where the detection of the control information 1 is successful, the terminal device 20 performs operation to detect control information 2.

In a case where the detection of the control information 2 is unsuccessful, the terminal device 20 can determine the transmission propriety by Energy Assessment 4. Alternatively, in the case where the detection of the control information 2 is unsuccessful, the terminal device 20 can be on the transmission standby based on information included in the control information 1 having already been acquired (e.g., L-SIG Duration or the like). On the other hand, in a case where the detection of the control information 2 is successful, the terminal device 20 performs data decoding.

As illustrated in FIG. 4, the synchronization preamble detection and channel estimation preamble detection operations can be included in the Carrier Sense. For example, in the case where the terminal device 20 has succeeded in the channel estimation preamble detection, in a case that the reception strength of the channel estimation preamble is lower than the CS level, the terminal device 20 can return to the transmission standby operation or can determine the transmission propriety by the Energy Assessment 1; in a case that the reception strength of the channel estimation preamble is higher than the CS level, the terminal device 20 can perform detection of the control information 1.

The terminal device 20 includes a function to change a CCA level. The "CCA level" is a name including the CS level and the ED level. Hereinafter, the CCA level may be the CS level or ED level unless otherwise stated.

The terminal device 20 includes a function to change the CCA level, at a time of receiving a signal, depending on whether the signal has been successfully demodulated. For example, the terminal device 20 includes a function to change a previously configured CCA level C to C1 in a case of having succeeded in demodulation, and to C2 in a case of having not succeeded in demodulation.

The terminal device 20 can change the CCA level based on operation before moving to Energy Assessment. For example, the terminal device 20 can configure different CCA levels for the Energy Assessment 1, Energy Assessment 2, Energy Assessment 3, and Energy Assessment 4. For example, the terminal device 20 can configure different CCA level change values for the Energy Assessment 1, Energy Assessment 2, Energy Assessment 3, and Energy Assessment 4. That is, Co which is a difference (offset) between a CCA level C11 before moving to the Energy Assessment and a CCA level C12 at the time of moving to the Energy Assessment and is obtained by subtracting C11 from C12, can be configured to have different values in response to the operation before moving to the Energy Assessment.

A successful detection of the control information 2 makes it possible for the terminal device 20 to decode the data. In other words, it can be understood that, only in a case that the control information 2 is detected, information associated with the radio LAN standard to which the received frame corresponds is acquired. In an aspect of the present invention, "to determine a signal to be a radio LAN signal" can mean "to determine the signal to be a radio LAN signal" or "to be a signal of other systems", or can also mean "to tell which of the standards the signal corresponds".

The information associated with the radio LAN standard to which the received frame corresponds can be acquired by power of the frame configuring the control information 1 and the frame configuring the control information 2. In the current IEEE 802.11n standard, the L-SIG is modulated by Quadrature BPSK (QBPSK) and the HT-SIG is modulated by the QBPSK. In the current IEEE 802.11ac standard, the L-SIG is modulated by BPSK and the VHT-SIG-A is modulated by the QBPSK. The QBPSK has such properties that power of a complex signal mapped on a complex plane is positioned on an imaginary axis, while the BPSK has such properties that the power of the complex signal is positioned on a real axis. Accordingly, the terminal device 20 can acquire the information associated with the radio LAN standard to which the received frame corresponds before acquiring information included in the control information 1 and the control information 2.

Further, the information associated with the radio LAN standard to which the received frame corresponds can also be acquired by a repetition check. For example, a frame in which the control information 1 or the control information 2 is iterated multiple times can correspond to any one of the radio LAN standards. The terminal device 20 can acquire the information associated with the radio LAN standard by performing the repetition check on the control information 1 or the control information 2.

In a case where the terminal device 20 cannot determine the received frame to be a radio LAN signal, the terminal device 20 moves to Energy Assessment. On the other hand, in the case where the frame received by the terminal device 20 is a radio LAN frame, moving to Energy Assessment can also mean that the Carrier Sense is not preferably performed. In other words, in the case that the terminal device 20 moves to the Energy Assessment, it is needless to emphasize usability obtained by changing the ED level. However, there also exists usability obtained by changing the CS level since the movement to the Energy Assessment itself means that the Carrier Sense is not preferably performed.

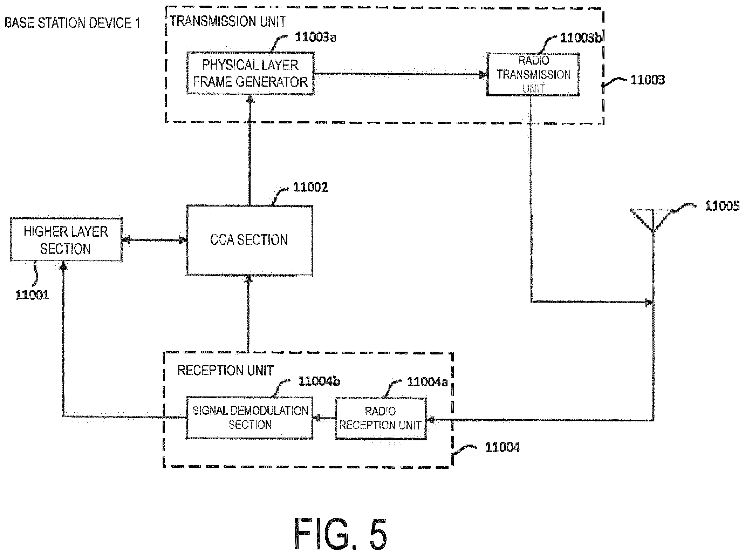

FIG. 5 is a diagram illustrating an example of a device configuration of the base station device 1. The base station device 1 is configured to include a higher layer section 11001, a CCA section 11002, a transmission unit 11003, a reception unit 11004, and an antenna unit 11005.

The higher layer section 11001 is connected to another network and includes a function to report information associated with a transmission frame to the CCA section 11002. In the following description, although transmission frames are assumed to be defined in the MAC layer, transmission frames according to the present embodiment can be also defined in other layers. For example, transmission frames can be also defined in the LLC layer and the Physical layer.

The CCA section 11002 includes a function to perform transmission propriety determination based on the CCA. Detailed operations of the CCA section 11002 will be explained later.

The transmission unit 11003 includes a Physical layer frame generator 11003a and a radio transmission unit 11003b.

The Physical layer frame generator 11003a includes a function to generate a Physical layer frame from a transmission frame reported from the CCA section 11002. The Physical layer frame generator 11003a performs, on the transmission frame, error correction coding, modulation, pre-coding filter multiplication, and the like. The Physical layer frame generator 11003a reports the generated Physical layer frame to the radio transmission unit 11003b.

The radio transmission unit 11003b converts the Physical layer frame generated by the Physical layer frame generator 11003a to a signal of a Radio Frequency (RF) band, thereby generating a radio frequency signal (a carrier signal or the like). Processing carried out by the radio transmission unit 11003b includes a digital-analog conversion, filtering, a frequency conversion from the base band to the RF band, and the like.

The reception unit 11004 includes a radio reception unit 11004a and a signal demodulation section 11004b.

The radio reception unit 11004a includes a function to convert an RF band signal received by the antenna unit 11005 to a baseband signal and generate a Physical layer signal (e.g., a Physical layer frame). Processing carried out by the radio reception unit 11004a includes frequency conversion processing from the RF band to the base band, filtering, and an analog-digital conversion. The radio reception unit 11004a can perform processing of synchronization preamble detection and channel estimation preamble detection on an RF band signal or a Physical layer signal.

The signal demodulation section 11004b includes a function to demodulate the Physical layer signal generated by the radio reception unit 11004a. Processing carried out by the signal processing unit 11004b includes synchronization preamble detection, channel estimation preamble detection, control information 1 and control information 2 detection, channel equalisation, demapping, error correction decoding, and the like.

The reception unit 11004 can acquire radio LAN determination information (information associated with a frame configuration) and report the acquired information to the CCA section 11002. The radio LAN determination information is information for determining whether the RF band signal reported from the antenna unit 11005 is a radio LAN signal. Details of the radio LAN determination information will be described later.

The antenna unit 11005 includes a function to transmit the radio frequency signal generated by the radio transmission unit 11003b into a radio space. The antenna unit 11005 also includes a function to receive a radio frequency signal. In the case where the base station device 1 performs CCA, the antenna unit 11005 includes a function to receive a signal of the channel present in a radio space.

Since the device configuration of the terminal device 20 includes a similar configuration to the device configuration of the base station device 1, description thereof will be omitted.

Although the following description is given focusing on features of the terminal device 20 unless otherwise stated, the base station device 1 also includes similar features.

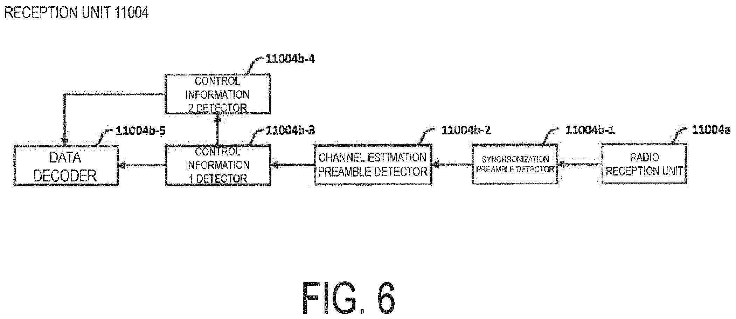

FIG. 6 is a diagram illustrating an example of a configuration of the reception unit 11004 included in the terminal device 20. The radio reception unit 11004a includes a function to convert the RF band signal reported from the antenna unit 11005 to a baseband signal. The radio reception unit 11004a can also include a function of synchronization preamble detection, a function of channel estimation preamble detection, and the like. In the case where the radio reception unit 11004a includes the functions of synchronization preamble detection and channel estimation preamble detection, operations of the radio reception section 11004a are the same as those of functions included in a synchronization preamble detector 11004b-1 or a channel estimation preamble detector 11004b-2 to be explained later.

The synchronization preamble detector 11004b-1 includes a function to detect a synchronization preamble from a Physical layer signal (or from an RF band signal). Although a method for detecting a synchronization preamble is not limited to any specific method in an aspect of the present invention, a method for detecting a peak signal based on sliding correlation, for example, is well-known. The synchronization preamble detector 11004b-1 includes a function to detect a synchronization preamble corresponding to the radio LAN standard, for example, and also includes a function to report, in the case where the synchronization preamble is detected, the Physical layer signal or RF band signal to the channel estimation preamble detector 11004b-2. On the other hand, in the case where the synchronization preamble is not detected, radio LAN determination information indicating that the synchronization preamble is not detected is generated.

The channel estimation preamble detector 11004b-2 includes a function to detect a channel estimation preamble from a Physical layer signal or an RF band signal reported from the synchronization preamble detector 11004b-1. The channel estimation preamble detector 11004b-2 can include, in the radio LAN determination information, information associated with whether the channel estimation preamble can be detected, and reports the Physical layer signal or RF band signal to a control information 1 detector 11004b-3 in the case where the channel estimation preamble has been successfully detected. In addition, the channel estimation preamble detector 11004b-2 can estimate a channel, generate channel state information, and report the generated information to the control information 1 detector 11004b-3.

The control information 1 detector 11004b-3 includes a function to detect control information 1. The control information 1 detector 11004b-3 attempts to detect the control information 1 using the Physical layer signal or RF band signal and the channel state information reported from the channel estimation preamble detector 11004b-2. The control information 1 detector 11004b-3 generates radio LAN determination information based on whether the control information 1 can be detected. In other words, the control information 1 detector 11004b-3 can include information associated with whether the control information 1 can be detected in the radio LAN determination information, and the selection of operation is made based on the control information included in the control information 1 in the case where the control information 1 has been successfully detected. For example, in the case where, as a detection result of the control information 1, the signal can be determined to be a signal corresponding to the standard of IEEE 802.11a, 11b or 11g, the Physical layer signal or RF band signal and a channel estimation signal as needed, can be reported to a data decoder 11004b-5. On the other hand, in the case where, as the detection result of the control information 1, to which of the standards the Physical layer signal or the RF band signal corresponds is unclear, the Physical layer signal or RF band signal, and the channel estimation signal as needed can be reported to a control information 2 detector 11004b-4. The control information 1 detector 11004b-3 can include, in the radio LAN determination information, information associated with the signal information, that is, to which of the standards of IEEE 802.11 the signal corresponds.

The control information 2 detector 11004b-4 includes a function to detect control information 2. The control information 2 detector 11004b-4 attempts to detect the control information 2 using the Physical layer signal or RF band signal and the channel state information reported from the control information 1 detector 11004b-3. The control information 2 detector 11004b-4 generates radio LAN determination information based on whether the control information 2 can be detected. In other words, the control information 2 detector 11004b-4 can include information associated with whether the control information 2 can be detected in the radio LAN determination information, and data decoding is carried out based on the control information included in the control information 2 in the case where the control information 2 has been successfully detected. The control information 2 detector 11004b-4 can report the Physical layer signal or RF band signal and the channel estimation signal as needed, to the data decoder 11004b-5. The control information 2 detector 11004b-4 can include, in the radio LAN determination information, information associated with the signal information, that is, to which of the standards of IEEE 802.11 the signal corresponds.

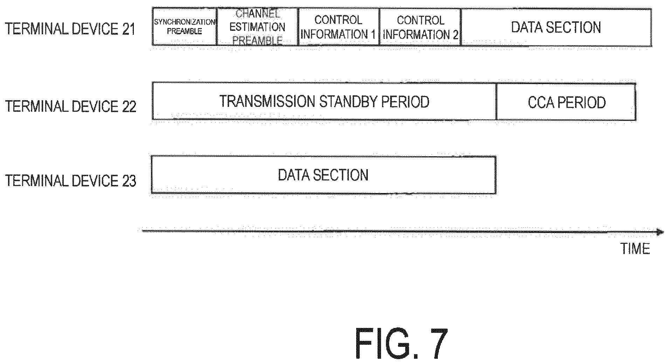

FIG. 7 is a diagram illustrating an example of a case in which a synchronization preamble cannot be detected. In the example illustrated in FIG. 7, the terminal device 21 transmits a frame of a configuration including a synchronization preamble, a channel estimation preamble, control information 1, control information 2, and data section; aside from the terminal device 21, the terminal device 23 has already transmitted another frame. Although, in the example illustrated in FIG. 7, the frame transmitted by the terminal device 23 is configured to include at least the data section, the stated configuration is not intended to limit an aspect of the present invention.

Meanwhile, in the example illustrated in FIG. 7, the terminal device 22 detects the frame of the terminal device 23 and is on a transmission standby, and then moves to a CCA period after a frame transmission period of the terminal device 23 is ended. Although the terminal device 22 performs the CCA during the CCA period, the terminal device 22 cannot acquire the synchronization preamble and the like (hereinafter, the synchronization preamble, channel estimation preamble, control information 1, and control information 2 are also collectively called the "synchronization preamble and the like") because the terminal device 21 has started the frame transmission prior to the CCA period start time. That is, the terminal device 22 generates radio LAN determination information including information associated with a situation that the synchronization preamble is not detected.

Part of technical issues according to an aspect of the present invention is to prevent the movement to unnecessary Energy Assessment. However, in the above example, although the movement to the Energy Assessment is originally unnecessary because the frame received by the terminal device 22 is a signal corresponding to the radio LAN standard, the terminal device 22 moves to the Energy Assessment due to the synchronization preamble and the like being not included during the CCA period. In this case, it is preferable for the terminal device 22 to generate radio LAN determination information based on the frame transmitted by the terminal device 21 during the CCA period and prevent the movement to the unnecessary Energy Assessment.

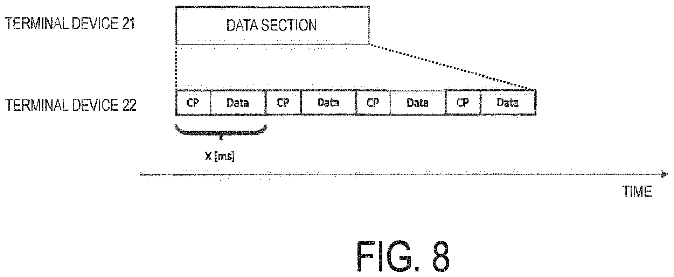

FIG. 8 is a diagram illustrating an example of part of the CCA period illustrated in FIG. 7. As illustrated in FIG. 7, the terminal device 22 cannot detect the synchronization preamble or the like of the terminal device 21 during the CCA period, but can generate radio LAN determination information based on the configuration of the frame transmitted by the terminal device 21. For example, in a case where the terminal device 22 acquires information associated with a configuration of a radio LAN frame (e.g., information indicating that a symbol configuring the radio LAN frame is constituted in X ms or the like, information indicating that a Cyclic Prefix (CP) is inserted within a symbol configuring the radio LAN frame, or the like), the terminal device 22 can determine whether the frame is a radio LAN frame.

In an aspect of the present invention, a method in which the terminal device 22 determines whether the frame is a radio LAN frame based on the information associated with the radio LAN frame is not limited to any specific one; for example, the terminal device 22 pays attention to a situation that the CP reuses part of Data and calculates a temporal correlation of the received frame. In this case, the calculated temporal correlation is assumed such that a peak is generated at a point where the CP and the reused part of Data overlap with each other. Accordingly, the frame can be determined to be a radio LAN frame in the case where the peak is generated as assumed.

A frequency at which a pilot subcarrier included in a radio LAN frame is disposed and a signal sequence used in the pilot subcarrier are known. Accordingly, the terminal device 22 can determine whether the frame is a radio LAN frame by performing correlation processing on the reception signal based on the above information.

In the method discussed above, a case in which the terminal device 22 uses a scheme configured to change the CS level and the ED level is cited as an example. The present embodiment can also be implemented by the terminal device 22 using a scheme configured to change minimum reception sensitivity. In other words, in a case that the terminal device 22 carries out operation to change the ED level in the description of the present embodiment, by not changing the ED level but changing the minimum reception sensitivity of the terminal device 22, the present embodiment can be implemented. The minimum reception sensitivity refers to a value indicating a threshold at which the terminal device 22 needs to move to signal detection operation with respect to a signal received with reception power no less than the minimum reception sensitivity.

As discussed thus far, the terminal device 20 can appropriately protect reception frames and consequently contribute to improvement in frequency efficiency by changing the CCA level based on the radio LAN determination information.

### 2. Features Common to All Embodiments

A program running on each of the base station device 1 and the terminal device 20 according to an aspect of the present invention is a program (a program for causing a computer to operate) that controls a CPU and the like in such a manner as to realize the functions according to an aspect of the above-described embodiments of the present invention. The information handled by these devices is temporarily held in a RAM at the time of processing, and is then stored in various types of ROMs, HDDs, and the like, and read out by the CPU as necessary to be edited and written. Here, a semiconductor medium (a ROM, a non-volatile memory card, or the like, for example), an optical recording medium (DVD, MO, MD, CD, BD, or the like, for example), a magnetic recording medium (a magnetic tape, a flexible disk, or the like, for example), and the like can be given as examples of recording media for storing the programs. In addition to realizing the functions of the above-described embodiments by performing loaded programs, functions according to an aspect of the present invention can be realized by the programs running cooperatively with an operating system, other application programs, or the like in accordance with instructions included in those programs.

In a case that delivering these programs to market, the programs can be stored in a portable recording medium, or transferred to a server computer connected via a network such as the Internet. In this case, storage devices in the server computer are also included in an aspect of the present invention. Furthermore, some or all portions of each of the base station device 1 and the terminal device 20 in the above-described embodiments may be realized as an LSI, which is a typical integrated circuit. The functional blocks of the base station device 1 and the terminal device 20 may be individually realized as chips, or may be partially or wholly integrated into a chip. In a case that the functional blocks are integrated into a chip, an integrated circuit control unit for controlling them is added.

The circuit integration technique is not limited to an LSI, and the integrated circuits for the functional blocks may be realized as dedicated circuits or a general-purpose processor. Furthermore, in a case where with advances in semiconductor technology, a circuit integration technology with which an LSI is replaced appears, it is also possible to use an integrated circuit based on the technology.

Note that the invention of the present patent application is not limited to the above-described embodiments. The base station device 1 and the terminal device 20 according to the invention of the present patent application is not limited to the application in the mobile station device, and, needless to say, can be applied to a fixed-type electronic apparatus installed indoors or outdoors, or a stationary-type electronic apparatus, for example, an AV apparatus, a kitchen apparatus, a cleaning or washing machine, an air-conditioning apparatus, office equipment, a vending machine, and other household apparatuses.

The embodiments of the invention have been described in detail thus far with reference to the drawings, but the specific configuration is not limited to the embodiments. Other designs and the like that do not depart from the essential spirit of the invention also fall within the scope of the claims.

### Industrial Applicability

The present invention can be preferably used in a terminal device and a communication method.

The present international application claims priority based on JP 2015-222858 filed on November 13, 2015, and all the contents of JP 2015-222858 are incorporated in the present international application by reference.

### DESCRIPTION OF REFERENCE NUMERALS

1 Base station device
20, 21, 22, 23 Terminal device
3 Management range
11001 Higher layer section
11002 CCA section
11003 Transmission unit
11003a Physical layer frame generator
11003b Radio transmission unit
11004 Reception unit
11004a Radio reception unit
11004b Signal demodulation section
11004b-1 Synchronization preamble detector
11004b-2 Channel estimation preamble detector
11004b-3 Control information 1 detector
11004b-4 Control information 2 detector
11004b-5 Data decoder
11005 Antenna unit

## Claims

1. A terminal device for communicating with a base station device, the terminal device comprising:
a reception unit configured to perform Clear Channel Assessment with a prescribed threshold and receive at least a first signal and a second signal; and a transmission unit configured to transmit a signal to the base station device,
wherein the prescribed threshold includes a first value and a second value,
the prescribed threshold takes the first value in a case where the second signal is given by iteration of the first signal, and
the prescribed threshold takes the second value in a case where the second signal is not given by iteration of the first signal.

2. The terminal device according to claim 1,
wherein the Clear Channel Assessment is Energy Assessment.

3. A terminal device for communicating with a base station device, the terminal device comprising:
a reception unit configured to perform Clear Channel Assessment with a prescribed threshold; and
a transmission unit configured to transmit a signal to the base station device,
wherein the prescribed threshold takes a first value in a case where a first signal is detected and a second signal cannot be detected, and
the prescribed threshold takes a second value in a case where the first signal cannot be detected.

4. The terminal device according to claim 3,
wherein the first signal is a synchronization preamble, and
the second signal is a channel estimation preamble.

5. The terminal device according to claim 3,
wherein the first signal is a synchronization preamble, and
the second signal is a signal including a PHY header.

6. The terminal device according to claim 3,
wherein the first signal is a channel estimation preamble, and
the second signal is a signal including a PHY header.

7. The terminal device according to claim 3,
wherein the first signal is first control information, and
the second signal is second control information.

8. The terminal device according to claim 7,
wherein the first control information is an HE-SIG-A, and
the second control information is an HE-SIG-B.

9. A communication method used in a terminal device, the communication method comprising the steps of:
performing Clear Channel Assessment with a prescribed threshold and receiving at least a first signal and a second signal; and
transmitting a signal to the base station device,
wherein the prescribed threshold includes a first value and a second value,
the prescribed threshold takes the first value in a case where the second signal is given by iteration of the first signal, and
the prescribed threshold takes the second value in a case where the second signal is not given by iteration of the first signal.

10. A communication method used in a terminal device, the communication method comprising the steps of:
performing Clear Channel Assessment with a prescribed threshold; and
transmitting a signal to the base station device,
wherein the prescribed threshold takes a first value in a case where a first signal is detected and a second signal cannot be detected, and
the prescribed threshold takes a second value in a case where the first signal cannot be detected.
